# EUROPEAN PATENT APPLICATION

(11) **EP 2 237 220 A2**
(43) Date of publication of application: **06.10.2010**
(21) Application number: 10158138.7
(22) Date of filing: 29.03.2010
(51) Int. Cl.: G06T 5/00

(54) **Method of correcting image distortion**

(30) Priority: 02.04.2009 KR 20090028535
(71) Applicant: SAMSUNG ELECTRONICS CO., LTD., Suwon-si, Gyeonggi-do (KR)
(72) Inventor: Lee, Ki ju, Gyeonggi-do (KR); Kim, Chung ung, Gyeonggi-do (KR); Park, Jong jin, Gyeonggi-do (KR); Cho, Dong hwl, Gyeonggi-do (KR); Bae, Su bong, Gyeonggi-do (KR); Kim, Jong cheol, Seoul (KR)
(74) Representative: Grünecker, Kinkeldey, Stockmair & Schwanhäusser Anwaltssozietät

(57) **Abstract**

Provided are a method of correcting image distortion and a computer-readable recording medium including a program for executing the method on a computer. An image, distorted by uneven illumination and lens curvature of an apparatus such as a digital camera, is corrected to obtain an accurate image.

## Description

### BACKGROUND

The embodiments relate to a method of correcting image distortion, and a computer-readable recording medium including a program for executing the method on a computer.

In many respects, an image transmitted through a lens is different from an image seen by the human eye because of various optical characteristics of the lens. Distortion of an image captured with a camera is increased toward the edge of the lens by the lens curvature. In addition, illumination brightness of a camera decreases from the center of the lens to its edge, which causes distortion of an image. In an image obtained by photographing a reaction sheet of an immunoassay apparatus, the brightness difference between reaction start and end portions may be distorted. Since such image distortion causes errors in numerically representing the brightness of a captured image, it is necessary to correct the image distortion.

As described above, the difference between an image detected at an image sensor through a lens and an image seen by the naked human eye is called lens aberration. Research has been actively carried out to correct lens aberration in the design and manufacture of lenses, so as to obtain substantially the same images as those seen by the human eyes.

There are many different types of lens aberration. Particularly, distortion aberration of a lens is caused by geometrical difference among the lens and a sensor and lens curvature. In this case, straight lines seen by human eyes are distorted into curved lines by the lenses.

There are two methods of correcting lens distortion. According to one method, an additional correction lens for correcting lens distortion is provided to physically correct an image before the image is detected by an image sensor. According to the other method, a distorted image is detected by pixels of an image sensor and is then corrected through software calculations. The former method requires an additional correction lens, which increases manufacturing costs of a camera. Thus, the latter method is widely used for optical apparatuses such as cameras.

### SUMMARY

Additional aspects and/or advantages will be set forth in part in the description which follows and, in part, will be apparent from the description, or may be learned by practice of the invention.

The embodiments provides a method of correcting image distortion.

The embodiments also provides a computer-readable recording medium including a program for executing the method on a computer.

According to another aspect of the embodiments, there is provided a method of correcting image distortion, the method including: photographing, with a camera, a subject including a surrounding area and a target area to provide an image of the subject to an image sensor of the camera; converting the image to an electrical signal at the image sensor; determining a second-order approximate equation y=ax² with x denoting a position value of the subject being analyzed, y' denoting a brightness value depending on x, and 'a' denoting a coefficient; determining a difference between an approximate brightness value y and y'; and adding or subtracting the difference to or from y' to correct y' that is caused by uneven illumination and/or lens curvature.

According to another aspect of the embodiments, there is provided a computer-readable recording medium including a program for executing the method of correcting image distortion on a computer.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a flowchart illustrating a method of correcting distortion due to a lens, according to an embodiment;
FIG. 2 is an image obtained by photographing, with an immunoassay apparatus, a reaction sheet before an immune reaction, according to an embodiment;
FIG. 3 is an image obtained by photographing, with an immunoassay apparatus, a reaction sheet after an immune reaction, according to an embodiment;
FIG. 4 is a graph based on the image of FIG. 2;
FIG. 5 is a graph illustrating a reference point used for selecting the position of a coordinate system that satisfies a correction equation for correcting a curve;
FIG. 6 is a graph illustrating a result obtained by correcting a convex curve of FIG. 4;
FIG. 7 is a graph based on the image of FIG. 3; and
FIG. 8 is a graph illustrating a result obtained by correcting a convex curve of FIG. 7.

### DETAILED DESCRIPTION OF EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

According to an aspect, there is provided a method of correcting image distortion, the method including: photographing a subject including a surrounding area (region or range) and a target area with a camera to provide an image of the subject to an image sensor of the camera; converting the image to an electrical signal at the image sensor; determining a second-order approximate equation y=ax² with x denoting a position value of the subject part of the image being analyzed, y' denoting a brightness value depending on x, and 'a' denoting a correction coefficient; and determining a difference between an approximate brightness value y and y'; and adding or subtracting the difference to or from y' to correct y' that is caused by uneven illumination and lens curvature.

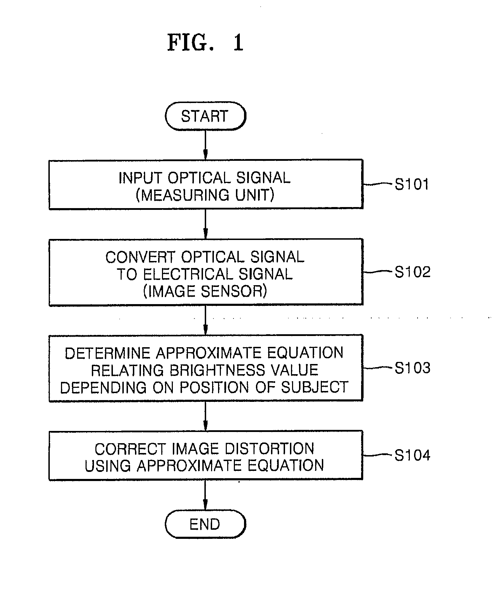

FIG. 1 is a flowchart illustrating a method of correcting distortion due to a lens of a digital camera, according to an embodiment.

In operation S101, an optical signal from a subject is input to a camera through a lens. In operation S102, an image sensor in the camera receives the optical signal and converts the optical signal to an electrical signal. In operation S103, an origin point (0, 0) is determined at a calculation unit, and a new coordinate system with the origin point (0, 0) is created to determine y=ax². Then, position values within the subject image are assigned to x, and brightness values depending on the position values are assigned to y, so as to determine a coefficient 'a'. Alternatively, a plurality of numbers are sequentially assigned to the coefficient 'a' in order to determine the coefficient 'a'. In operation S104, image distortion due to the lens is corrected by correcting the brightness values using y=ax² with the determined coefficient 'a'.

In another embodiment, the method may further include outputting of a result given by correcting the image distortion.

Hereinafter, the method of correcting image distortion will now be described in more detail.

First, a subject including a surrounding area and a target area is photographed with a camera, and an image of the subject is provided to an image sensor of the camera.

The term "subject", which is an object generating an optical signal and providing the optical signal to a camera, may include a surrounding area (region or range) and a target area and provide an optical image having a high brightness difference between the surrounding area and the target area. For example, since a reaction sheet used in an immune reaction kit has a high brightness difference between a surrounding area, a reaction start portion, and a reaction end portion according to whether an immune reaction occurs, the reaction sheet is used as the subject as described above.

The camera for photographing the subject may be any digital camera including an image sensor.

The term "image sensor" is defined as a device that captures an image using the characteristic of a semiconductor responding to light. Such an image sensor detects, using pixels, various brightness levels and wavelengths of light emitted from a subject, and converts them to electrical values. That is, an image sensor is a semiconductor device converting an optical image to an electrical signal. Such image sensors are classified into a charge-coupled device (CCD) and a complementary metal-oxide semiconductor (CMOS). The CCD includes metal-oxide semiconductor (MOS) capacitors that are very close to each other for storing and transferring electric charges. The CMOS employs CMOS technology in which a control circuit and a signal-processing circuit are used as peripheral circuits, and a switching method in which outputs of pixels are sequentially detected by MOS transistors, the number of which is the same as the number of pixels.

In another embodiment, the method of correcting image distortion may be performed using an immunoassay apparatus including an illuminating unit, a measuring unit, an image sensor, a calculating unit, and an output unit.

The immunoassay apparatus is any apparatus determining any increase and decrease in expression of a target protein due to an antigen-antibody reaction, and any apparatus photographing, with a camera, a sample generating a light-emitting signal or a color signal through an antigen-antibody reaction to determine the amount of the light-emitting signal or color signal. For example, when a target protein is in contact with a reaction sheet to which an antigen or antibody is adhered, the amount of a light emitting signal or color signal varies according to whether the target protein is present on the reaction sheet or whether the amount of the target protein is large or small on the reaction sheet. When the camera of the immunoassay apparatus photographs the reaction sheet as a subject, the immunoassay apparatus analyzes the amount of a light emitting signal or color signal to output a graph or a value to a user.

Then, the image of the subject is converted into an electrical signal at the image sensor.

Then, y=ax² is determined based on the electrical signal.

A reference point may be determined within an optical image including the subject, and the reference point may be set to zero, so as to determine x based on a distance from the reference point. The left end of the optical image may be set as the reference point zero on an x-axis. For example, when a subject is a reaction sheet used in an immune reaction kit, the left end of the reaction sheet is set as a reference point zero on an x-axis, and a horizontal length of the reaction sheet may be expressed as a distance from the reference point along with the x-axis. The range of the x-axis may be expressed in a length unit (e.g. pixel, mm or cm) of the subject, but is not limited thereto.

y, which is obtained by converting the brightness of the subject into the electrical signal, may range from 0 to 255.

In another embodiment, the determining of the second-order approximate equation y=ax² may include: setting, as an origin point (0, 0) of y=ax², a point where the brightness value within the surrounding area is maximum or minimum; and sequentially assigning a plurality of numbers to the coefficient 'a' of y=ax² so as to select, as the coefficient 'a', the number when the number of both position values on position x and brightness value are disposed within the surrounding area and satisfy approximate bright value y=ax² is largest (or relatively large).

In another embodiment, the determining of the second-order approximate equation or quadratic curve y=ax² may include: setting, as an origin point (0, 0) of y=ax², a point where the brightness value within the surrounding area is maximum or minimum; and selecting, as the coefficient 'a', a mean of values of the coefficient 'a' given by inputting at least 2 position values of the surrounding area and brightness values depending on the at least 2 position values to y=ax².

In particular, when the surrounding area is of a white-based color, the position value corresponding to the maximum brightness value and the maximum brightness value are set as the coordinates of the origin point (0, 0). On the other hand, when the surrounding area is of a black-based color, the position value corresponding to the minimum brightness value and the minimum brightness value are set as the coordinates of the origin point (0, 0). According to a new coordinate system having the origin (0, 0), the coefficient 'a' is determined. In a method of determining the coefficient 'a', numbers are sequentially assigned to the coefficient 'a' of y=ax² so as to select, as the coefficient 'a', the number when the number of both position values x and brightness values that are disposed within the surrounding area and satisfy y=ax² is largest (or relatively large). In another method of determining the coefficient 'a', a mean of values of the coefficient 'a' given by inputting at least 2 position values of the surrounding area and brightness values depending on the at least 2 position values to the approximate brightness equation y=ax² is selected as the coefficient 'a'. In this case, the number of both the at least 2 position values of the surrounding area and the brightness values depending on the at least 2 position values may be increased to obtain an accurate value of the coefficient 'a'.

The methods of determining the coefficient 'a' may be automatically executed by a program, or a tester may manually designate values into y=ax² on the basis of an output graph.

Lens curvature and/or uneven illumination on the subject cause distortion in which brightness values depending on position values within the subject decrease or increase from the center of the subject to its edge. This distortion is corrected using y=ax².

Finally, a difference between an approximate brightness y and brightness y' on position x is determined, and the difference is added to or subtracted from y to correct y' that is caused by uneven illumination and/or lens curvature.

y=ax² is a correction equation that is used to correct y', thus correcting image distortion. Hereinafter, the method of correcting image distortion using the correction equation will now be described.

First, a difference between approximate brightness y and brightness y' on position x is determined. The difference is zero at the origin point (0, 0), and uneven illumination and/or lens curvature cause the difference to increase toward the edge of the subject. y' is corrected by adding the difference to y' when the coefficient 'a' is less than zero, and by subtracting the difference from y' when the coefficient 'a' is greater than zero.

Thus, a target brightness value of the target area of the optical image can be accurately calculated using a value given by correcting y'.

According to another aspect , there is provided a computer-readable recording medium including a program for executing, on a computer, the method of correcting image distortion.

The method may also be embodied as computer readable code on a computer-readable recording medium. The computer-readable recording medium is any data recording device that stores data which is thereafter read by a computer that is any system processing information. Examples of the computer-readable recording medium include read-only memory (ROM), random-access memory (RAM), CD-ROMs, magnetic tapes, floppy disks, and optical data storage.

### Example 1: Analyzing image distortion due to lens

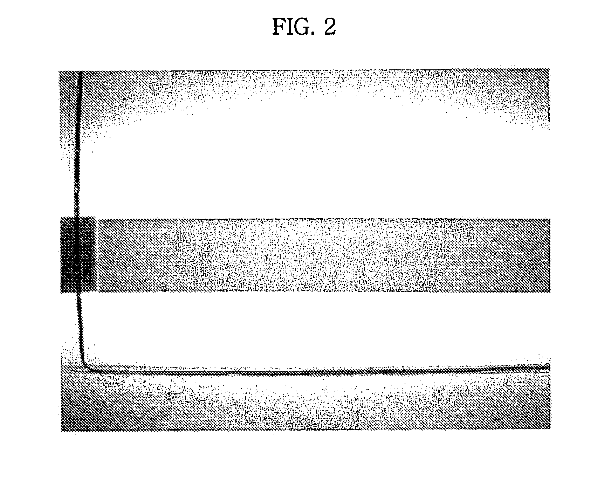

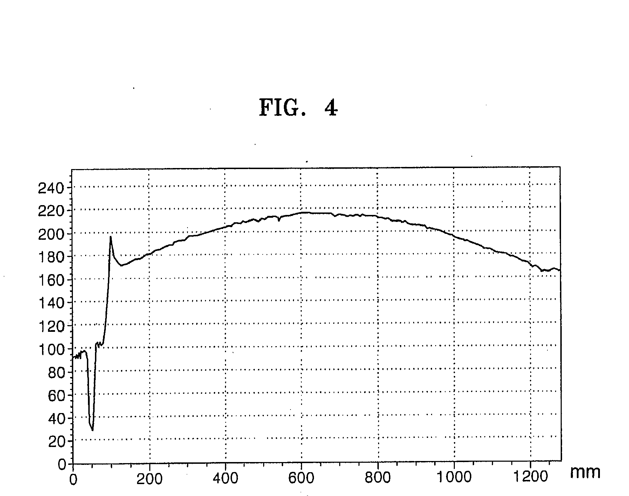

FIG. 2 is an image obtained by photographing, with an immunoassay apparatus, a reaction sheet as a subject under illumination, according to an embodiment. FIG. 4 is a graph with a brightness value y depending on a position value x of the subject, based on the image of FIG. 2.

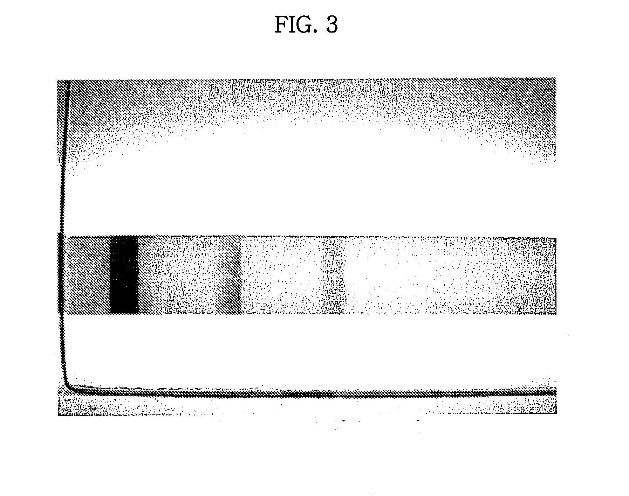

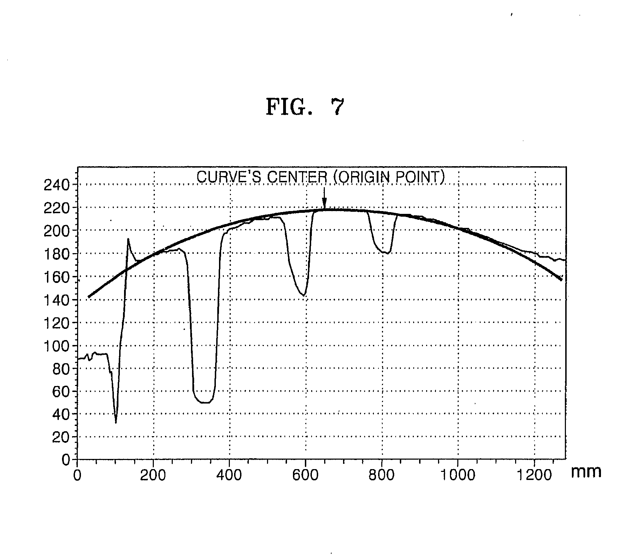

FIG. 3 is an image obtained by photographing the reaction sheet as a subject under illumination after an immune reaction. FIG. 7 is a graph with a brightness value y' depending on a position value x of the subject, based on the image of FIG. 3.

In each of the graphs of FIGS. 4 and 7, an x-axis denotes a horizontal distance with the left end of the reaction sheet as zero, and a y-axis denotes the brightness value of the obtained image.

Referring to FIG. 2, since there is no immune reaction specimen on the reaction sheet, the levels of brightness according to positions within the reaction sheet are constant, and thus, brightness values obtained by analyzing electrical signals should approximately form a straight line on the graph. However, when an optical image is incident into a camera through a lens, the optical image is distorted by the lens and illumination. Thus, a convex curve was plotted in the upper end of the graph as illustrated in FIG. 4. Trough curves, shown in portions of the graphs where the horizontal distance is close to zero, were excluded when analyzing brightness values of surrounding and target areas of the reaction sheet since the trough curves are not the brightness values of the surrounding and target areas.

Referring to FIG. 3, reaction areas of the reaction sheet where the immune reaction occurs are darker than their surrounding areas, and the brightness of the reaction sheet varies according to the intensity of the immune reaction. Thus, portions of the graph corresponding to the reaction areas are recessed. Since the rest of the reaction sheet except for the reaction areas has constant brightness, a line having a constant value should be formed in the upper portion of the graph. However, even in this case, an optical image is incident into the camera through the lens, and the optical image is distorted by the lens. Thus, a convex curve is plotted in the upper portion of the graph as illustrated in FIG. 7.

### Example 2: Correction of image distortion using correction equation

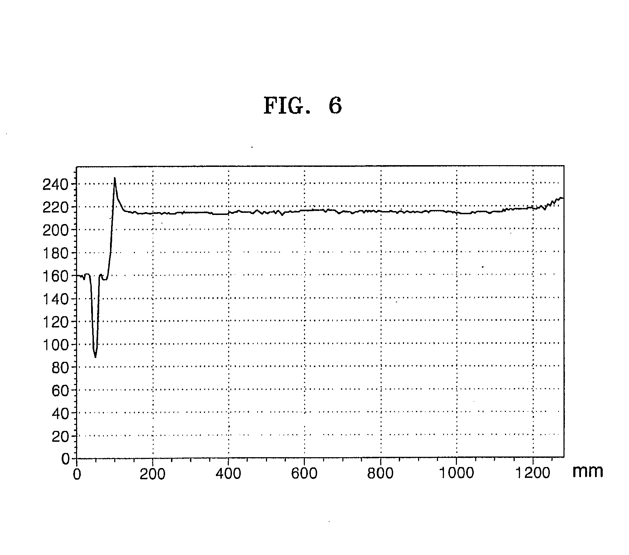

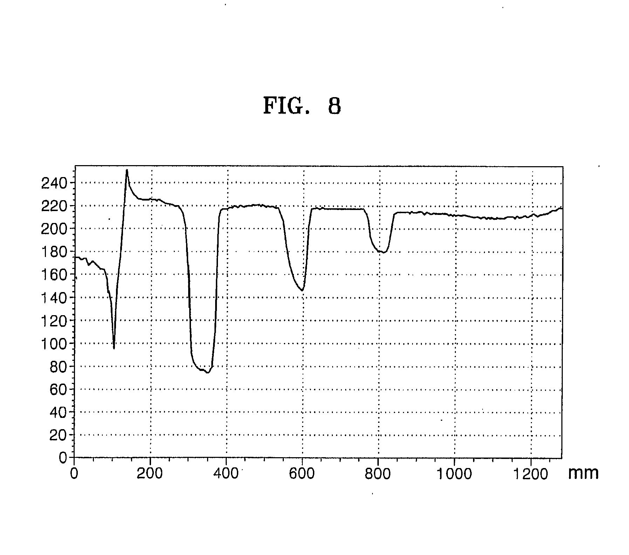

An immunoassay apparatus, numerically representing the intensity of a reaction, is required to correct an optical image distorted by a lens as described in the embodiment of FIGS. 2, 3, 4 and 7. FIGS. 6 and 8 are graphs illustrating results obtained by correcting the convex curves, shown in FIGS. 4 and 7, using the correction equation as described above.

The graph of FIG. 4 may have a convex or concave curve according to the lens shape and illumination as described in the embodiment of FIGS. 2, 3, 4 and 7. The convex curve of FIG. 4 may be expressed as y=ax², and the correction coefficient 'a' may be used for correcting lens curvature. A position having the maximum brightness value, that is, the coordinates of a point where y is largest is used as the vertex of y=ax².

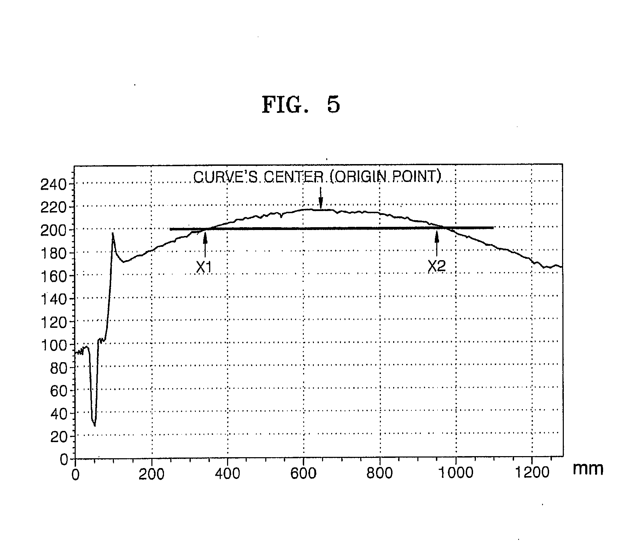

FIG. 5 is a graph illustrating a reference point used for selecting the position of a coordinate system that satisfies the correction equation for correcting the curve. x and y at the center of the convex curve are the coordinates of the vertex of the correction equation. Coordinates of points X1 and X2 from the vertex are input to y=ax² to determine the coefficient 'a'.

The graph of FIG. 6, approximately having a straight line, was obtained by correcting the graph of FIG. 4 using the correction equation. The graph of FIG. 8, approximately having a straight line in its upper portion, was obtained by correcting the graph of FIG. 7 using the correction equation.

Although a few embodiments have been shown and described, it would be appreciated by those skilled in the art that changes may be made in these embodiments without departing from the principles and spirit of the invention, the scope of which is defined in the claims and their equivalents.

## Claims

1. A method of correcting image distortion for an immunoassay apparatus, the method comprising:
converting the image of a subject to an electrical signal by a image sensor;
determining a second-order approximate equation y=ax² with x denoting a position value within the subject, y' denoting a brightness value of position x, and 'a' denoting a coefficient;
determining a difference between an approximate equation value y and the brightness value y'; and
adding or subtracting the difference to or from y' to correct y' that is caused by uneven illumination and/or lens curvature.

2. The method of claim 1, further comprising outputting a result given by correcting the image distortion.

3. The method of claim 1, wherein the determining of the second-order approximate equation y=ax² comprises:
setting, as an origin point (0, 0) of y=ax², a point where the brightness value of the surrounding area is maximum or minimum; and
sequentially assigning a plurality of numbers to the coefficient 'a' of y=ax² so as to select, as the coefficient 'a', the number when the number of both position values and
brightness values that are disposed within the surrounding area and satisfy y=ax² is largest (or relatively large).

4. The method of claim 1, wherein the determining of the second-order approximate equation y=ax² comprises:
setting, as an origin point (0, 0) of y=ax², a point where the brightness value of the surrounding area is maximum or minimum; and
selecting, as the coefficient 'a', a mean of values of the coefficient 'a' given by inputting at least 2 position values of the surrounding area and brightness values depending on the at least 2 position values to y=ax².

5. The method of claim 1, wherein the method is performed using an immunoassay apparatus comprising an illuminating unit, a measuring unit, the image sensor, a calculating unit, and an output unit.

6. A computer-readable recording medium comprising a program for executing the method of claim 1 on a computer.

7. A method of correcting image distortion, the method comprising:
determining, by a computer, a quadratic curve corresponding to brightness caused by a lens capturing an image of an immunoassay reaction sheet; and
correcting, by the computer, the brightness of the image using the curve.
